## Europäisches Patentamt
## European Patent Office
## Office européen des brevets

(19)

(11) Veröffentlichungsnummer: **0 004 587**
**B1**

(12)

# EUROPÄISCHE PATENTSCHRIFT

(45) Veröffentlichungstag der Patentschrift:
09.02.83

(51) Int. Cl.³: **C 08 J 3/20,** C 08 J 3/12,
C 08 L 29/04

(21) Anmeldenummer: 79100812.1

(22) Anmeldetag: 16.03.79

(54) Weichmacherhaltiges Polyvinylalkohol-Granulat und Verfahren zu seiner Herstellung.

(30) Priorität: 23.03.78 DE 2812684
22.09.78 DE 2841238

(43) Veröffentlichungstag der Anmeldung:
17.10.79 Patentblatt 79/21

(45) Bekanntmachung des Hinweises auf die Patenterteilung:
09.02.83 Patentblatt 83/6

(84) Benannte Vertragsstaaten:
BE CH DE FR GB IT NL SE

(56) Entgegenhaltungen:
DE-B-1 172 043
FR-A-1 324 826
Die Akte enthält technische Angaben, die nach dem
Eingang der Anmeldung eingereicht wurden und die
nicht in dieser Patentschrift enthalten sind.

(73) Patentinhaber: HOECHST AKTIENGESELLSCHAFT,
Postfach 80 03 20, D-6230 Frankfurt/Main 80 (DE)

(72) Erfinder: Zimmermann, Wolfgang, Dr., Im Stückes 48,
D-6233 Kelkheim (Taunus) (DE)
Erfinder: Harréus, Albrecht, Dr.,
Philipp-Kremer-Strasse 16, D-6233 Kelkheim (Taunus)
(DE)

# Weichmacherhaltiges Polyvinylalkohol-Granulat und Verfahren zu seiner Herstellung

Es ist bekannt, daß Polyvinylalkohol (PVAL) auf thermoplastischem Wege nicht ohne weiteres verarbeitet werden kann, da er sich bereits unterhalb der Erweichungstemperatur thermisch zersetzt. Für die thermoplastische Verarbeitung ist es daher erforderlich, daß der Erweichungsbereich des PVAL herabgesetzt wird; dies geschieht üblicherweise durch die Einarbeitung von Weichmachern.

Handelsüblicher PVAL liegt überwiegend als Pulver vor. Eine homogene Einarbeitung von Weichmachern in ein solches Produkt ist dadurch erschwert, daß die PVAL-Partikel je nach Größe unterschiedliche Weichmachermengen aufnehmen. Die thermoplastische Verarbeitung des weichmacherhaltigen PVAL führt daher leicht zu Formkörpern, in denen der Weichmacher inhomogen verteilt ist, was sich auf die Eigenschaften des Formkörpers nachteilig auswirkt.

Die Herstellung von weichmacherhaltigen Polyvinylalkohol ist ebenfalls bereits bekannt (vgl. z. B. deutsche Offenlegungsschrift 2 302 871 = britische Patentschrift 1 410 744). Bei dem bekannten Verfahren wird die erwünschte gute Durchmischung von PVAL und Weichmacher dadurch erreicht, daß der mit Methanol angequollene PVAL mit dem Weichmacher vermischt und schließlich vom Methanol befreit wird. Über die Korngröße des dabei eingesetzten PVAL-Granulats sind jedoch keine Angaben gemacht. Das bekannte Verfahren hat den Nachteil, daß für die Einarbeitung des Weichmachers methanolfeuchter PVAL benötigt wird; handelsübliches trockenes PVAL-Granulat kann dort nicht verwendet werden.

Aufgabe der Erfindung ist die Bereitstellung eines PVAL-Granulats, das rieselfähig und aufgrund seines Weichmachergehalts thermoplastisch verarbeitbar sein soll, wobei die PVAL-Partikel eine möglichst einheitliche Größe aufweisen und möglichst grobkörnig sein sollen und der Weichmacher in den PVAL-Partikeln in möglichst homogener Verteilung vorliegen soll.

Die Erfindung betrifft nun ein thermoplastisch verarbeitbares, weichmacherhaltiges, rieselfähiges, nicht klebendes Polyvinylalkohol-Granulat und ist dadurch gekennzeichnet, daß das Polyvinylalkohol-Granulat zu mindestens 70 Gewichtsprozent aus Partikeln mit einem Durchmesser von 0,8 bis 4 mm besteht, in denen ein Weichmacher homogen verteilt vorliegt.

Die Erfindung betrifft ferner ein Verfahren zur Herstellung eines thermoplastisch verarbeitbaren, weichmacherhaltigen, rieselfähigen, nicht klebenden Polyvinylalkohol-Granulats durch Vermischen eines Polyvinylalkohol-Granulats mit einem Weichmacher, das dadurch gekennzeichnet ist, daß 100 Gewichtsteile eines trockenen Polyvinylalkohol-Granulats, das zu mindestens 70 Gewichtsprozent aus Partikeln mit einem Durchmesser von 0,4 bis 4 mm besteht, und 5 bis 50 Gewichtsteile eines Weichmachers in Gegenwart einer solchen Menge Wasser, die unter Normalbedingungen zur Lösung des Polyvinylalkohols nicht ausreicht, intensiv und homogen miteinander vermischt werden und die Temperatur des Gemisches während des Mischvorgangs derart erhöht und wieder gesenkt wird, daß die Polyvinylalkohol-Partikel quellen und vorübergehend agglomerieren.

Eine bevorzugte Ausführungsform des erfindungsgemäßen Verfahrens betrifft ein Verfahren zur Herstellung eines thermoplastisch verarbeitbaren, weichmacherhaltigen, rieselfähigen, nicht klebenden Polyvinylalkohol-Granulats durch Vermischen eines Polyvinylalkohol-Granulats mit einem Weichmacher, das dadurch gekennzeichnet ist, daß 100 Gewichtsteile eines trockenen Polyvinylalkohol-Granulats, das zu mindestens 70 Gewichtsprozent aus Partikeln mit einem Durchmesser von 0,4 bis 4 mm besteht, und 5 bis 50 Gewichtsteile eines Weichmachers in Gegenwart einer solchen Menge Wasser, die unter Normalbedingungen zur Lösung des Polyvinylalkohols nicht ausreicht, intensiv und homogen miteinander vermischt werden und die Temperatur des Gemisches während des Mischvorgangs derart erhöht und wieder gesenkt wird, daß die Polyvinylalkohol-Partikel quellen und vorübergehend agglomerieren, wobei das Vermischen in Gegenwart von 1 bis 15 Gewichtsteilen einer feinteiligen, in Wasser löslichen oder dispergierbaren, hochmolekularen organischen Verbindung durchgeführt wird, die aus Partikeln mit Durchmessern von höchstens 300 µm besteht.

Die Erfindung betrifft weiterhin das nach den vorgenannten Verfahren erhaltene Polyvinylalkohol-Granulat.

Der erfindungsgemäß verwendete PVAL wird in bekannter Weise hergestellt durch Verseifung, vorzugsweise durch Alkoholyse, von Polyvinylestern, vorzugsweise Polyvinylacetat (vgl. z. B. deutsche Patentschrift 1 720 709 = britische Patentschrift 1 168 757). Die 4gewichtsprozentige wäßrige Lösung des PVAL weist eine Viskosität von 4 bis 70 mPa · s, vorzugsweise 10 bis 60 mPa · s auf (gemessen bei einer Temperatur von 20° C). Die Esterzahl des PVAL liegt im Bereich von 10 bis 250 mg KOH/g, vorzugsweise 20 bis 200 mg KOH/g.

Ein wesentliches Merkmal der Erfindung ist die Verwendung von PVAL-Granulat, das überwiegend aus Partikeln einer bestimmten Größenordnung besteht, als Ausgangsmaterial zur Herstellung des gewünschten weichmacherhaltigen Produktes. Mindestens 70 Gewichtsprozent, vorzugsweise mindestens 90 Gewichtsprozent des Ausgangs-PVAL-Granulats sollen aus Partikeln mit einem Durchmesser von 0,4 bis 4 mm, vorzugsweise von 0,6 bis 3 mm bestehen. Der Restanteil von höchstens 30, vorzugsweise höchstens 10 Gewichtsprozent Ausgangsmaterials besteht hauptsächlich aus Partikeln mit geringerem Durchmesser. Dies ist jedoch nicht nachteilig, da diese feinkörnigen Partikel beim Vermischen mit dem Weichmacher nahezu vollständig zu grobkörnigen Partikeln agglomerieren. Das als Endprodukt erhaltene PVAL-Granulat ist thermoplastisch verarbeitbar, nicht klebend und gut rieselfähig; es besteht im wesentlichen, d. h. zu mindestens 70 Gewichtsprozent, vorzugsweise zu mindestens 90 Gewichtsprozent, aus Partikeln mit einem Durchmesser von 0,8 bis 4 mm, vorzugsweise von 1 bis 3,5 mm.

Ein weiteres Merkmal der Erfindung ist die Einarbeitung des Weichmachers in das trockene PVAL-Granulat in Gegenwart von Wasser, und zwar in einer Menge, die unter Normalbedingungen zur Lösung des jeweils eingesetzten PVAL nicht ausreicht. Je nach Art des verwendeten PVAL beträgt die Menge des Wassers 2 bis 40, vorzugsweise 4 bis 30 Gewichtsprozent (bezogen auf den Polyvinylalkohol). Eine Entfernung des nach Beendigung des Mischvorgangs noch vorhandenen Wassers ist nicht erforderlich.

Als Weichmacher eignen sich vor allem mehrwertige aliphatische Alkohole mit Siedepunkten oberhalb 250° C, insbesondere zweiwertige bis sechswertige Alkanole mit 2 bis 6 Kohlenstoffatomen; zwei- oder dreiwertige Alkanole werden bevorzugt eingesetzt. Als Beispiele seien genannt Ethylenglykol, Glycerin, Trimethylolpropan, Neopentylglykol und Sorbit. Anstelle eines einzelnen Weichmachers kann auch ein Gemisch verschiedener Weichmacher verwendet werden. Die Menge des einzusetzenden Weichmachers beträgt 5 bis 50, vorzugsweise 10 bis 30 Gewichtsprozent (bezogen auf den Polyvinylalkohol).

Von großer Bedeutung für das Verfahren der Erfindung ist die Temperaturführung während des Mischvorganges. Die Temperatur des Gemisches muß so geführt werden, daß die als Ausgangsmaterial eingesetzten PVAL-Partikel quellen und vorübergehend agglomerieren. Zu diesem Zweck wird die Temperatur des Gemisches, ausgehend von Raumtemperatur, kontinuierlich zunächst bis zu einem Maximum erhöht und dann wieder gesenkt, wobei sich während der Temperatursteigerung lockere PVAL-Agglomerate bilden, die nach Erreichen des Temperaturmaximums leicht wieder zerfallen. Das Temperaturmaximum übersteigt 140° C nicht und liegt vorzugsweise im Bereich von 100 bis 130° C; in der Abkühlungsphase wird die Temperatur auf 40 bis 70° C und vorzugsweise auf 35 bis 60° C gesenkt. Die Temperaturerhöhung und die Temperaturerniedrigung werden vorzugsweise in etwa gleichen Zeiträumen durchgeführt.

Eine bevorzugte Ausführungsform der Erfindung ist dadurch charakterisiert, daß das Vermischen des Polyvinylalkohol-Granulats mit dem Weichmacher in Gegenwart von 1 bis 15, vorzugsweise 2 bis 12 Gewichtsteilen (bezogen auf 100 Teile Polyvinylalkohol-Granulat) einer feinteiligen, in Wasser löslichen oder dispergierbaren, hochmolekularen organischen Verbindung durchgeführt wird. Der Partikeldurchmesser der hochmolekularen Verbindung beträgt im allgemeinen höchstens 300 μm und liegt vorzugsweise im Bereich von 0,1 bis 300 μm. Der durchschnittliche Polymerisationsgrad (Gewichtsmittel $\bar{P}_w$) der hochmolekularen Verbindung beträgt mindestens 200 und liegt vorzugsweise im Bereich von 300 bis 5000.

Die hochmolekulare Verbindung kann natürlichen Ursprungs oder synthetisch hergestellt sein. Geeignet sind beispielsweise Stärke und Stärkederivate, Cellulosederivate wie Methylcellulose und Carboxyhydroxycellulose, Kasein und Gelatine sowie insbesondere Vinylpolymere. Als Vinylpolymere eignen sich vor allem Polyvinylalkohol selbst und Derivate des Polyvinylalkohols, insbesondere Polyvinylester wie Poly(vinylacetat) und Poly(vinylpropionat), Polyvinylacetate wie Poly(vinylformal) und Poly(vinylbutyral). Auch Copolymere verschiedener Vinylverbindungen sind verwendbar, vorzugsweise Copolymere des Vinylacetats mit Ethylen, Maleinsäurediestern, Fumarsäurediestern, Acrylsäureestern, Methacrylsäureestern oder Acrylnitril, wobei die Alkoholkomponente der vorgenannten Ester vorzugsweise 2 bis 8 Kohlenstoffatome aufweist.

Die hochmolekulare Verbindung wird im allgemeinen in Pulverform verwendet; das Pulver wird vorzugsweise durch Sprühtrocknen einer entsprechenden Lösung oder Dispersion erhalten. Der Durchmesser der Pulverpartikel beträgt zweckmäßigerweise 10 bis 300 μm, vorzugsweise 20 bis 200 μm. Eine besonders bevorzugte Ausführungsform des erfindungsgemäßen Verfahrens besteht darin, daß die hochmolekulare Verbindung in Form einer wäßrigen Dispersion eingesetzt wird. Hierbei liegt der Partikeldurchmesser der dispergierten hochmolekularen Verbindung vorzugsweise im Bereich von 0,1 bis 10 μm und besonders vorteilhaft im Bereich von 0,2 bis 8 μm.

Die hochmolekulare Verbindung wird dem PVAL-Granulat vorzugsweise vor der Zugabe des Weichmachers zugefügt, sie kann aber auch gleichzeitig oder im Gemisch mit dem Weichmacher zu dem vorgelegten PVAL-Granulat gegeben werden.

Für den gesamten Mischvorgang wird je nach Art und Menge der Mischkomponenten und der Art der Mischvorrichtung ein Zeitraum von 10 Minuten bis 3 Stunden benötigt. Während des Vermischens der trockenen PVAL-Partikel mit dem flüssigen Weichmacher/Wasser-Gemisch quellen die Partikel, wodurch die Diffusion des Weichmachers in das Partikelinnere erleichtert wird.

Der Weichmacher soll möglichst homogen in den PVAL-Partikeln verteilt werden. Dies läßt sich dadurch erreichen, daß solche Mischvorrichtungen verwendet werden, die eine intensive und bleibende Durchmischung der Mischkomponenten gewährleisten. Besonders geeignete Mischvorrichtungen sind Zwangsmischer mit vertikal oder horizontal angeordnetem Rührer sowie Planetenrührwerke. Die Mischvorrichtungen sind zweckmäßigerweise mit Heiz- und Kühleinrichtungen ausgerüstet. Die oben erwähnte Temperaturerhöhung erfolgt je nach Art der Mischvorrichtung durch Friktionswärme oder Mantelheizung.

Das erfindungsgemäße Verfahren kann auch kontinuierlich durchgeführt werden, z. B. in waagerecht liegenden Reaktionsrohren mit Schaufelrührwerk oder Schnecke sowie in kontinuierlich arbeitenden Knetern, jeweils ausgerüstet mit den erforderlichen Heiz- und Kühlzonen.

Hilfsstoffe, die die thermoplastische Verarbeitung des PVAL-Granulats erleichtern, können ebenfalls in das Granulat eingearbeitet werden. In Frage kommen vor allem Gleitmittel, z. B. Stearinsäure, Wachse, Polyethylenglykole mit Molekulargewichten von 400 bis 20 000, feinteilige Kieselsäure und Erdalkalistearate, vorzugsweise Calciumstearat, sowie Hitzestabilisatoren und Farbstoffe. Die Menge solcher Hilfsstoffe beträgt insgesamt höchstens 3 Gewichtsprozent, vorzugsweise 0,04 bis 1,0 Gewichtsprozent (bezogen auf Polyvinylalkohol).

Das erfindungsgemäße PVAL-Granulat kann ohne Schwierigkeiten thermoplastisch verformt werden, z. B. durch Pressen, Spritzgießen und Extrudieren. Es eignet sich zur Herstellung von beliebigen Formkörpern, z. B. Platten, Rohren, Profilen, Fasern und insbesondere Folien.

Die gute Verarbeitbarkeit des erfindungsgemäßen PVAL-Granulats beruht vor allem darauf, daß durch das Vermischen des Ausgangsmaterials mit Weichmacher in Gegenwart einer feinteiligen hochmolekularen organischen Verbindung eine zusätzliche Egalisierung der PVAL-Partikel erzielt wird. Dadurch wird die Plastifizierung des weichgemachten PVAL-Granulats bei der thermoplastischen Verarbeitung wesentlich erleichtert. Darüber hinaus zeigen manche hochmolekularen Verbindungen noch eine ausgeprägte Gleitmittelwirkung.

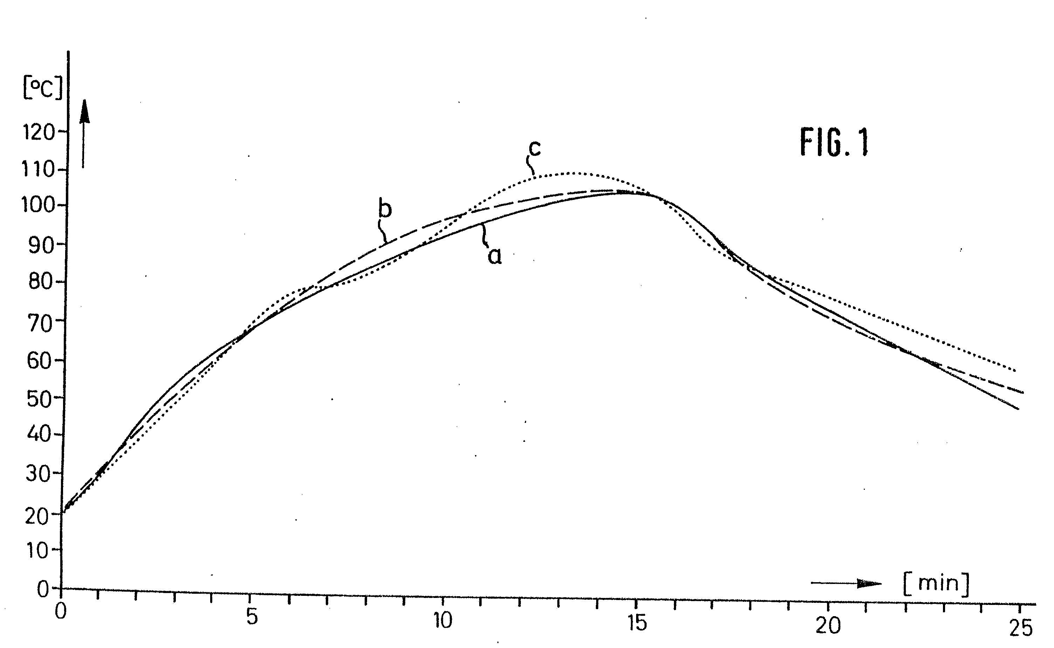

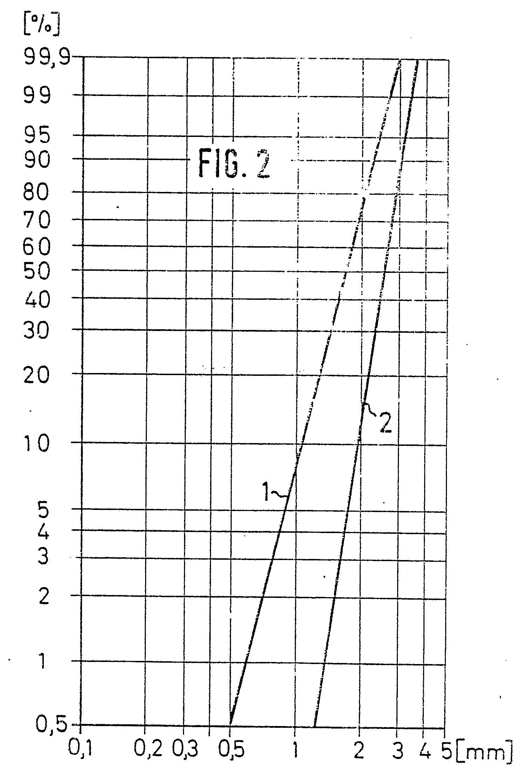

Die Erfindung wird durch die nachstehenden Beispiele näher erläutert. Fig. 1 gibt den Temperaturverlauf des Verfahrens gemäß den Beispielen 1, 2 und 3 wieder. Durch Fig. 2 bis 5 wird der Effekt des erfindungsgemäßen Verfahrens veranschaulicht, nämlich eine Vergröberung und Egalisierung der Partikelgrößen des PVAL-Granulats. Fig. 2 bis 5 geben die durch Siebanalyse ermittelte Korngrößenverteilungen des jeweiligen Ausgangsmaterials (Kurve 1) und des Endprodukts (Kurve 2) wieder. Auf der Abszisse ist der Partikeldurchmesser (mm) und auf der Ordinate der Siebdurchgang (%) aufgetragen. Dabei ist die Steigung der Kurven ein Maß für die Einheitlichkeit der PVAL-Partikel.

### Beispiel 1

In einem 35-l-Zwangsmischer (Hersteller: Fa. Papenmeier, Detmold) werden 6 kg eines handelsüblichen granulierten PVAL vorgelegt, dessen Partikel Durchmesser im Bereich von 0,6 bis 3 mm aufweisen, das eine Esterzahl von 140 mg KOH/g aufweist und dessen 4%ige wäßrige Lösung eine Viskosität von 18 mPa · s hat. Zu dieser Vorlage wird unter Rühren bei Raumtemperatur innerhalb von 1 min ein Gemisch aus 750 g Glycerin und 240 g Wasser gegeben, wobei die Rührgeschwindigkeit 1200 UpM beträgt. Nach etwa 4 min beginnen die PVAL-Partikel zu agglomerieren, und nach etwa 17 min werden die Agglomerate wieder zerschlagen. Während des Mischvorgangs steigt die Temperatur innerhalb von 15 min auf 105° C und wird durch Mantelkühlung und Reduzierung der Rührgeschwindigkeit auf 600 UpM innerhalb von 10 min auf 50° C gesenkt (Temperaturverlauf: vgl. Fig. 1, Kurve a). Dann wird das weichmacherhaltige PVAL-Granulat abgelassen. Es besteht aus Partikeln mit Durchmessern im Bereich von 1 bis 4 mm und ist gut rieselfähig. Das Granulat läßt sich auf einem Einschneckenextruder zu einer einwandfreien Blasfolie mit einer Stärke von 30 μm verarbeiten.

Die Wiederholung dieses Beispiels in einem 160-l-Zwangsmischer ergibt keine abweichenden Ergebnisse.

### Beispiel 2

Beispiel 1 wird mit folgenden Abweichungen wiederholt: Die Ausgangs-PVAL-Partikel haben Durchmesser im Bereich von 0,6 bis 2,5 mm, und der PVAL weist eine Esterzahl von 90 mg KOH/g auf; die Viskosität der 4%igen wäßrigen Lösung beträgt 30 mPa · s. Die Glycerinmenge ist 1050 g und die Wassermenge 300 g. Nach etwa 3 min beginnen die PVAL-Partikel zu agglomerieren, und nach etwa 16 min werden die Agglomerate wieder zerschlagen. Die Temperatur steigt während des Mischvorgangs auf 105° C (Temperaturverlauf: vgl. Fig. 1, Kurve b). Das weichmacherhaltige PVAL-Granulat besteht aus Partikeln im Bereich von 0,9 bis 3,5 mm. Es läßt sich wie in Beispiel 1 zu einer einwandfreien Blasfolie verarbeiten.

### Beispiel 3

Beispiel 1 wird mit folgenden Abweichungen wiederholt: Die PVAL-Partikel haben Durchmesser im Bereich von 0,5 bis 2,5 mm, und der PVAL weist eine Esterzahl von 20 mg KOH/g auf; die Viskosität der 4%igen wäßrigen Lösung beträgt 20 mPa · s. Die Glycerinmenge ist 1500 g und die Wassermenge 900 g. Zusätzlich werden noch 3 g Calciumstearat zur Vorlage gegeben. Nach etwa 6 min beginnen die PVAL-Partikel zu agglomerieren, und nach etwa 16 min werden die Agglomerate wieder zerschlagen. Die Temperatur steigt während des Mischvorgangs auf 80° C an und wird durch zusätzliche Heizung auf 110° C erhöht (Temperaturverlauf: vgl. Fig. 1, Kurve c). Das weichmacherhaltige PVAL-Granulat besteht aus Partikeln im Bereich von 0,9 bis 3,3 mm. Es läßt sich wie in Beispiel 1 zu einer einwandfreien Blasfolie extrudieren.

### Beispiel 4

In einem 5-I-Mischer mit Planetenrührwerk wird 1 kg des in Beispiel 1 verwendeten PVAL-Granulats vorgelegt und unter den Bedingungen des Beispiels 1 mit einer Lösung von 100 g Trimethylolpropan und 2 g Polyäthylenglykol (Molekulargewicht 1500) in 30 g Wasser vermischt. Die Aufheizung erfolgt hierbei durch Mantelheizung. Der Temperaturverlauf stimmt mit demjenigen gemäß Beispiel 1 überein. Das erhaltene weichmacherhaltige PVAL-Granulat entspricht dem nach Beispiel 1 hergestellten.

### Beispiel 5

In dem in Beispiel 1 verwendeten Mischgerät wird ein Gemisch aus

| | |
|---|---|
| 6,0 kg | eines handelsüblichen PVAL-Granulats (Esterzahl: 90 mg KOH/g; Viskosität der 4gewichtsprozentigen wäßrigen Lösung: 30 mPa · s; Partikeldurchmesser: 0,5 bis 3 mm) und |
| 0,3 kg | eines Polyvinylacetat-Pulvers (durchschnittlicher Polymerisationsgrad: 1500; Partikeldurchmesser: 20 bis 200 μm) |

vorgelegt. Zu dieser Vorlage wird unter Rühren (1200 UpM) bei Raumtemperatur ein Gemisch aus

| | |
|---|---|
| 1,2 kg | Glycerin und |
| 0,3 kg | Wasser |

gegeben. Nach etwa 3 min beginnen die PVAL-Partikel zu agglomerieren, und nach etwa 16 min werden die Agglomerate wieder zerschlagen. Während des Mischvorganges steigt die Temperatur innerhalb von 15 min auf 105°C und wird durch Mantelkühlung und Reduzierung der Rührgeschwindigkeit auf 600 UpM innerhalb von 10 min auf 50°C gesenkt. Dann wird das weichmacherhaltige PVAL-Granulat abgelassen. Es besteht aus Partikeln mit Durchmessern im Bereich von 1,2 bis 3,7 mm und ist gut rieselfähig und nicht klebend. Die Korngrößenverteilung des Ausgangsmaterials (Kurve 1) und des Endprodukts (Kurve 2) ist aus Fig. 2 ersichtlich.

### Beispiel 6

In dem in Beispiel 1 verwendeten Mischgerät werden

| | |
|---|---|
| 6,0 kg | eines handelsüblichen PVAL-Gra- |

nulats (Esterzahl: 20 mg KOH/g; Viskosität der 4gewichtsprozentigen wäßrigen Lösung: 20 mPa · s; Partikeldurchmesser: 0,6 bis 2,5 mm)

vorgelegt. Zu dieser Vorlage wird unter Rühren (1200 UpM) bei Raumtemperatur ein Gemisch aus

| | |
|---|---|
| 1,05 kg | Glycerin, |
| 0,3 kg | Wasser und |
| 1,2 kg | einer 50gewichtsprozentigen wäßrigen Polyvinylacetat-Dispersion (durchschnittlicher Polymerisationsgrad: 1500; Partikeldurchmesser: 0,6 bis 6,0 μm) |

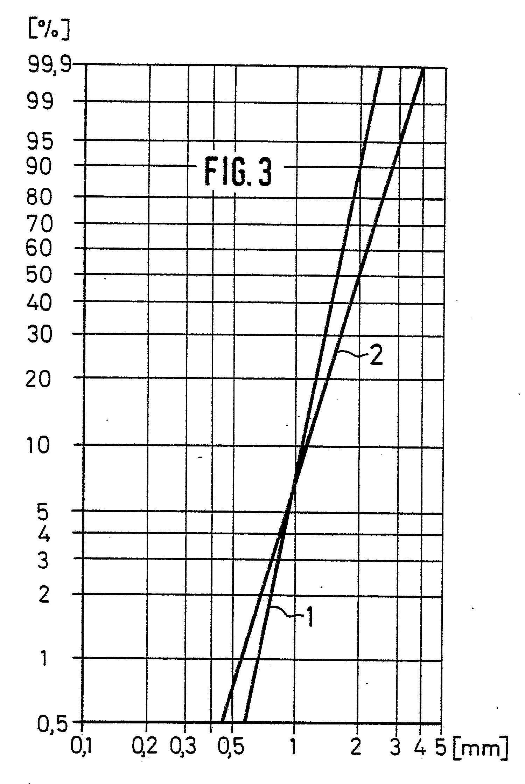

gegeben. Nach etwa 3 min beginnen die PVAL-Partikel zu agglomerieren, und nach etwa 16 min werden die Agglomerate wieder zerschlagen. Während des Mischvorgangs wird die Temperatur innerhalb von 10 min auf 110°C erhöht und dann durch Mantelkühlung und Reduzierung der Rührgeschwindigkeit auf 600 UpM innerhalb von 15 min auf 50°C gesenkt. Dann wird das weichmacherhaltige PVAL-Granulat abgelassen. Es besteht aus Partikeln mit Durchmessern im Bereich von 0,45 bis 4,0 mm und ist gut rieselfähig und nicht klebend. Die Korngrößenverteilung des Ausgangsmaterials (Kurve 1) und des Endprodukts (Kurve 2) ist aus Fig. 3 ersichtlich.

### Beispiel 7

In dem in Beispiel 1 verwendeten Mischgerät wird ein Gemisch aus

| | |
|---|---|
| 6,0 kg | eines handelsüblichen PVAL-Granulats (Esterzahl: 140 mg KOH/g; Viskosität der 4gewichtsprozentigen wäßrigen Lösung: 18 mPa · s; Partikeldurchmesser: 0,4 bis 4,0 mm) und |
| 0,15 kg | eines Polyvinylbutyral-Pulvers (durchschnittlicher Polymerisationsgrad: 1600; Partikeldurchmesser: 100 bis 200 μm) |

vorgelegt. Zu dieser Vorlage wird unter Rühren (1200 UpM) bei Raumtemperatur ein Gemisch aus

| | |
|---|---|
| 0,75 kg | Glycerin und |
| 0,24 kg | Wasser |

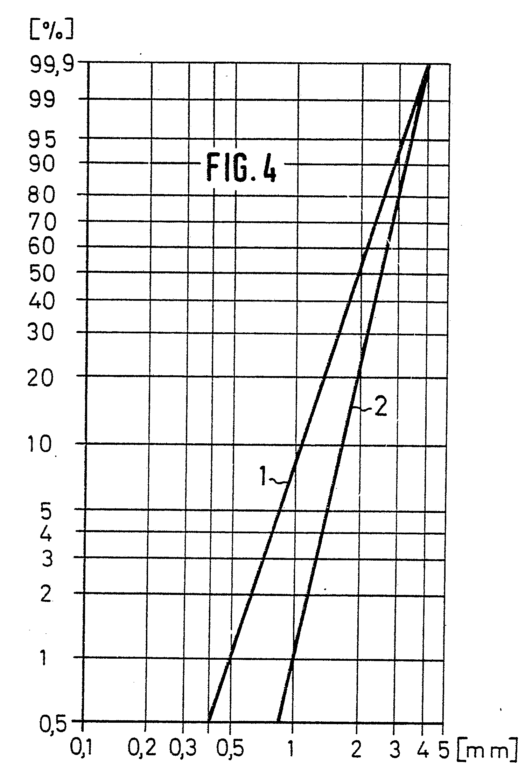

gegeben. Nach etwa 3 min beginnen die PVAL-Partikel zu agglomerieren, und nach etwa 16 min werden die Agglomerate wieder zerschlagen. Während des Mischvorgangs steigt die Temperatur innerhalb von 15 min auf 105°C und wird durch Mantelkühlung und Reduzierung der Rührgeschwindigkeit auf 600 UpM innerhalb von 10 min auf 50°C gesenkt. Dann wird das weichmacherhaltige PVAL-Granulat abgelassen. Es besteht aus Partikeln mit Durchmessern im Bereich von 0,9 und 4,0 mm und ist gut rieselfähig und nicht klebend. Die Korngrößenverteilung des Ausgangsmaterials (Kurve 1) und des Endprodukts (Kurve 2) ist aus Fig. 4 ersichtlich.

Beispiel 8

In dem in Beispiel 1 verwendeten Mischgerät werden

6,0 kg eines handelsüblichen PVAL-Granulats (Esterzahl: 140 mg KOH/g; Viskosität der 4gewichtsprozentigen wäßrigen Lösung: 18 mPa · s; Partikeldurchmesser: 0,4 bis 4,0 mm)

vorgelegt. Zu dieser Vorlage wird unter Rühren (1200 UpM) bei Raumtemperatur ein Gemisch aus

0,75 kg Glycerin
0,3 kg Wasser und
0,12 kg einer 50gewichtsprozentigen wäßrigen Vinylacetat/Dibutylmaleinat-Copolymer-Dispersion (Monomerverhältnis: 50 : 50; durchschnittlicher Polymerisationsgrad 1200; Partikeldurchmesser: 0,6 bis 6,0 µm)

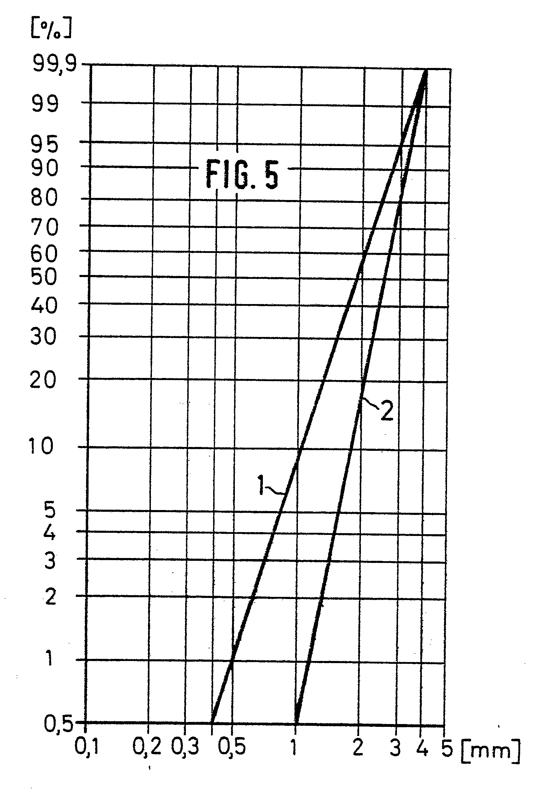

gegeben. Nach etwa 3 min beginnen die PVAL-Partikel zu agglomerieren, und nach etwa 16 min werden die Agglomerate wieder zerschlagen. Während des Mischvorgangs steigt die Temperatur innerhalb von 13 min auf 110°C und wird dann durch Mantelkühlung und Reduzierung der Rührgeschwindigkeit auf 600 UpM innerhalb von 12 min auf 50°C gesenkt. Dann wird das weichmacherhaltige PVAL-Granulat abgelassen. Es besteht aus Partikeln mit Durchmessern im Bereich von 1,0 bis 4,0 mm und ist gut rieselfähig und nicht klebend. Die Korngrößenverteilung des Ausgangsmaterials (Kurve 1) und des Endprodukts (Kurve 2) ist aus Fig. 5 ersichtlich.

**Patentansprüche**

1. Thermoplastisch verarbeitbares, weichmacherhaltiges, rieselfähiges, nicht klebendes Polyvinylalkohol-Granulat, das als Weichmacher einen mehrwertigen aliphatischen Alkohol mit einem Siedepunkt oberhalb 250°C in einer Menge von 5 bis 50 Gewichtsprozent enthält (bezogen auf den Polyvinylalkohol), dadurch gekennzeichnet, daß das Polyvinylalkohol-Granulat zu mindestens 70 Gewichtsprozent aus Partikeln mit einem Durchmesser von 0,8 bis 4 mm besteht, in denen der Weichmacher und gegebenenfalls 1 bis 15 Gewichtsprozent (bezogen auf das Polyvinylalkohol-Granulat) einer feinteiligen, hochmolekularen organischen Verbindung, deren Partikeldurchmesser höchstens 300 µm und deren durchschnittlicher Polymerisationsgrad mindestens 200 beträgt, homogen verteilt vorliegen.

2. Verfahren zur Herstellung eines thermoplastisch verarbeitbaren, weichmacherhaltigen, rieselfähigen, nicht klebenden Polyvinylalkohol-Granulats, das als Weichmacher einen mehrwertigen aliphatischen Alkohol mit einem Siedepunkt oberhalb 250°C in einer Menge von 5 bis 50 Gewichtsprozent enthält (bezogen auf den Polyvinylalkohol), dadurch gekennzeichnet, daß ein trockenes Polyvinylalkohol-Granulat, das zu mindestens 70 Gewichtsprozent aus Partikeln mit einem Durchmesser von 0,4 bis 4 mm besteht, mit dem Weichmacher in Gegenwart von 2 bis 40 Gewichtsprozent (bezogen auf den Polyvinylalkohol) Wasser, wobei die Menge des Wassers unter Normalbedingungen zur Lösung des Polyvinylalkohols nicht ausreicht, sowie gegebenenfalls mit 1 bis 15 Gewichtsprozent (bezogen auf das Polyvinylalkohol-Granulat) einer feinteiligen, hochmolekularen organischen Verbindung, deren Partikeldurchmesser höchstens 300 µm und deren durchschnittlicher Polymerisationsgrad mindestens 200 beträgt, intensiv und homogen vermischt wird und die Temperatur des Gemisches während des Mischvorgangs zunächst auf höchstens 140°C erhöht und danach auf 40 bis 70° gesenkt wird, wobei die Polyvinylalkohol-Partikel quellen und vorübergehend agglomerieren.

3. Verfahren nach Anspruch 2, dadurch gekennzeichnet, daß die Erhöhung und die Senkung der Temperatur während des Mischvorgangs in etwa gleichen Zeiträumen durchgeführt wird.

4. Verfahren nach Anspruch 2, dadurch gekennzeichnet, daß als hochmolekulare Verbindung ein Polyvinylalkohol, Polyvinylester oder Polyvinylacetal verwendet wird.

5. Verfahren nach Anspruch 2, dadurch gekennzeichnet, daß die hochmolekulare Verbindung in Form einer Dispersion verwendet wird.

6. Verfahren nach Anspruch 5, dadurch gekennzeichnet, daß die hochmolekulare Verbindung in Form einer Dispersion verwendet wird, wobei der Partikeldurchmesser der dispergierten hochmolekularen Verbindung im Bereich von 0,1 bis 10 µm liegt.

7. Verfahren nach Anspruch 2, dadurch gekennzeichnet, daß die hochmolekulare Verbindung in Form eines durch Sprühtrocknen erhaltenen Pulvers verwendet wird.

8. Verfahren nach Anspruch 7, dadurch gekennzeichnet, daß die hochmolekulare Verbindung in Form eines Pulvers verwendet wird, wobei der Partikeldurchmesser im Bereich von 10 bis 300 µm liegt.

9. Verfahren nach Anspruch 2, dadurch gekennzeichnet, daß die hochmolekulare Verbindung dem Polyvinylalkohol-Granulat vor der Zugabe des Weichmachers zugefügt wird.


## Claims

1. Thermoplastically processible, plasticiser-containing, pourable, tack-free polyvinyl alcohol granules containing as plasticiser a polyhydric aliphatic alcohol having a boiling point above 250°C in an amount of from 5 to 50 percent by weight (relative to the polyvinyl alcohol), characterized in that the polyvinyl alcohol granules consist, by at least 70 percent by weight, of particles having a diameter of from 0.8 to 4 mm, in which particles the plasticiser and, optionally, 1 to 15 percent (relative to the polyvinyl alcohol granules) of a fine-particle, high molecular weight organic compound are homogeneously distributed, said organic compound having a particle diameter of at most 300 μm and an average degree of polymerisation of at least 200.

2. Process for the manufacture of thermoplastically processible, plasticiser-containing, pourable, tack-free polyvinyl alcohol granules containing as plasticiser a polyhydric aliphatic alcohol having a boiling point above 250°C in an amount of from 5 to 50 percent by weight (relative to the polyvinyl alcohol), characterized in that dry polyvinyl alcohol granules consisting, by at least 70 percent by weight, of particles having a diameter of from 0.4 to 4 mm are intensely and homogeneously mixed with the plasticiser in the presence of from 2 to 40 percent by weight (relative to the polyvinyl alcohol) of water insufficient for dissolving the polyvinyl alcohol under normal conditions and, optionally, with 1 to 15 percent by weight (relative to the polyvinyl alcohol granules) of a fine-particle, high molecular weight organic compound having a particle diameter of at most 300 μm and an average degree of polymerisation of at least 200, and the temperature of the mixture, during the mixing operation, is first raised to at most 140°C and then decreased to 40 to 70°C, in the course of which the polyvinyl alcohol particles swell and temporarily agglomerate.

3. Process according to claim 2, characterized in that the raising and the decreasing of the temperature is performed in about similar periods of time.

4. Process according to claim 2, characterized in that as high molecular weight compound there is used a polyvinyl alcohol, polyvinyl ester or polyvinyl acetal.

5. Process according to claim 2, characterized in that the high molecular weight compound is used in the form of a dispersion.

6. Process according to claim 5, characterized in that the high molecular weight compound is used in the form of a dispersion, the particle diameter of the dispersed high molecular weight compound being in the range of from 0.1 to 10 μm.

7. Process according to claim 2, characterized in that the high molecular weight compound is used in the form of a powder obtained by spray-drying.

8. Process according to claim 7, characterized in that the high molecular weight compound is used in the form of a powder, the particle diameter being in the range of from 10 to 300 μm.

9. Process according to claim 2, characterized in that the high molecular weight compound is added to the polyvinyl alcohol granules before the addition of the plasticiser.


## Revendications

1. Granulés d'alcool polyvinylique ne collant pas, pouvant bien s'écouler, contenant du plastifiant, pouvant être transformé par voie thermoplastique, contenant comme plastifiant un polyalcool aliphatique dont le point d'ébullition est supérieur à 250°C, et qui est présent en une quantité de 5 à 50% en poids (par rapport à l'alcool polyvinylique), ces granulés d'alcool polyvinylique étant caractérisés en ce qu'ils consistent pour au moins 70% en poids en des particules dont le diamètre se situe entre 0,8 et 4 mm et dans lesquelles le plastifiant et éventuellement 1 à 15% en poids (par rapport aux granulés d'alcool polyvinylique) d'un composé organique à poids moléculaire élevé, en fines particules dont le diamètre s'élève au maximum à 300 μm et dont le degré moyen de polymérisation est au moins égal à 200, est ou sont réparti(s) de façon homogène.

2. Procédé de préparation de granulés d'alcool polyvinylique ne collant pas, pouvant s'écouler, contenant du plastifiant, pouvant être transformé par voie thermoplastique, contenant comme plastifiant un polyalcool aliphatique dont le point d'ébullition est supérieur à 250°C et qui est présent en une quantité de 5 à 50% en poids (par rapport à l'alcool polyvinylique) procédé caractérisé en ce qu'on mélange de façon intense et de manière à obtenir un mélange homogène des granulés secs d'alcool polyvinylique, consistant pour au moins 70% en poids en des particules dont le diamètre se situe entre 0,4 et 4 mm, avec le plastifiant en présence de 2 à 40% en poids (par rapport à l'alcool polyvinylique) d'eau, la quantité d'eau ne suffisant pas dans des conditions normales pour dissoudre l'alcool polyvinylique, et éventuellement avec 1 à 15% en poids (par rapport aux granulés de l'alcool polyvinylique) d'un composé organique à poids moléculaire élevé, en fines particules dont le diamètre est d'au maximum 300 μm et dont le degré moyen de polymérisation est au moins égal à 200, et en ce qu'on élève tout d'abord à 140°C au maximum la température du mélange pendant l'opération de mélange puis on abaisse la température à une valeur comprise entre 40 et 70°, de sorte que les particules d'alcool polyvinylique se gonflent et s'agglomèrent transitoirement.

3. Procédé selon la revendication 2, caractérisé en ce qu'on effectue en des intervalles de temps approximativement égaux l'élévation et l'abaissement de la température pendant l'opération de mélange.

4. Procédé selon la revendication 2, caractérisé en ce qu'on utilise comme composé à poids moléculaire élevé un alcool polyvinylique, un ester polyvinylique ou du polyvinylacétal.

5. Procédé selon la revendication 2, caractérisé en ce qu'on utilise sous forme d'une dispersion le composé à poids moléculaire élevé.

6. Procédé selon la revendication 5, caractérisé en ce qu'on utilise sous forme d'une dispersion le composé à poids moléculaire élevé, le diamètre des particules de composé dispersé à poids moléculaire élevé se situant entre 0,1 et 10 µm.

7. Procédé selon la revendication 2, caractérisé en ce qu'on utilise, sous forme d'une poudre obtenue par séchage par atomisation, le composé à poids moléculaire élevé.

8. Procédé selon la revendication 7, caractérisé en ce qu'on utilise le composé à poids moléculaire élevé sous forme d'une poudre dont le diamètre des particules se situe entre 10 et 300 µm.

9. Procédé selon la revendication 2, caractérisé en ce qu'on ajoute aux granulés de l'alcool polyvinylique le composé à poids moléculaire élevé avant d'ajouter le plastifiant.

FIG.1

FIG. 2

FIG. 3

FIG. 4

FIG. 5